# EUROPEAN PATENT SPECIFICATION

(11) **EP 1 296 553 B1**
(45) Date of publication and mention of the grant of the patent: **12.12.2012**
(21) Application number: 01924563.8
(22) Date of filing: 30.03.2001
(51) Int. Cl.: A01M 1/20

(54) **SEGMENTED INSECT CONTROL MAT**
SEGMENTIERTE INSEKTENBEKÄMPFUNGSMATTE
TABLETTE ANTI-INSECTE SEGMENTÉE

(30) Priority: 18.04.2000 US 198114 P
(43) Date of publication of application: 02.04.2003
(73) Proprietor: S. C. Johnson & Son, Inc., Racine, WI 53403 (US)
(72) Inventor: FLASHINSKI, Stanley, J., Racine, WI 53402 (US); SCHILDWACHTER, Stephen, Buenos Aires (AR)
(74) Representative: Ruschke, Hans Edvard
(86) International application number: PCT/US2001/010543
(87) International publication number: WO 2001/078488

(56) References cited:
- WO-A-99/66791
- FR-A- 2 547 735
- US-A- 4 614 299

## Description

### BACKGROUND OF THE INVENTION

The present invention relates to mats bearing insecticide or other insect control active ingredients. Such mats conventionally are used with heaters to dispense the insect control active ingredients to control flying insects. These mats traditionally are placed whole onto a hot plate or other heating arrangement, most typically electrically energized.

Most commonly, such conventional mats are used for a single night and then are discarded. Although multiple night mats have also existed, they tend to exhibit a nonlinear release of active ingredient--a higher release rate at the beginning that tails off as the mat is used. Also, a heat-responsive dye is commonly used to provide a use-up cue, the color of the mat fading over time as it is heated. It is difficult for multiple day mats to provide a definite, precise indication of partial use, such as cues for first day vs. second day vs. third day use.

In addition, the hot plates of many conventional heating devices tend to have a central region that is hotter than the edges of the hot plate. Such hot plates typically are rectangular, and often the hotter, central region is a region extending the length of the hot plate, along its center. Responding to this uneven distribution of heat, conventional mats tend to lose their active ingredient faster at their center. Once active ingredient has been driven off the hot, central region of a mat, the overall active ingredient release rate from the mat drops below the rate necessary for continued satisfactory insect control. This causes users to discard the mat before there is complete release of active ingredient along the edges of the mat. The result is waste or a failure to obtain as effective a control of insects as might be obtained with more complete release of active ingredient.

It can therefore be seen that there is a need for an improved insect control mat that can be made available to a user in a familiar form but that is easy to use in such a way that linear insect control is obtained over a multi-day period and a more complete release of active ingredient is obtained from every part of the mat.

From US 4614299 it is know to package a volatile substance within a substrate held in a matrix of adjoining polymer pouches. The pouches are formed as a sheet and are separatable at score lines on the sheet.

### BRIEF SUMMARY OF THE INVENTION

The invention is as defined is claim 1 below. It can provide an insect control mat that has a mat body having a selected thickness. A mat body thickness of from 2.0 mm to 2.5 mm is preferred. Mat bodies can be made of fibrous materials, cellulosic felts being preferred. However, the mat bodies of the invention can also be made of absorbent ceramics, woven materials, and, indeed, any materials sufficiently strong and absorbent to be handled in use and to bear insect control active ingredients, as discussed below, including but not limited to materials used in conventional insect control mats.

The mat body has indentations that define break lines such that a user of the mat body can readily separate the mat body along the break lines into subsections. A mat body is defined as being "readily" separated into subsections along a break line if a user can accomplish the separation manually and without needing to resort to scissors, a knife, or some other tool, either by directly tearing the mat body along the break line or by first flexing the mat body at the break line. The term "indentations" is defined to include partial thickness indentations as well as indentations that pass entirely through the mat, thus defining perforations. The indentations are either perforating slits or partial thickness indentations that are laterally extended with respect to the break line established by the indentations. However, circular indentations or indentations having other shapes are also within the invention. When the indentations are partial thickness indentations, the depth of the partial thickness indentations is from 50 to 80 percent of the mat body thickness.

Preferably, the mat body is generally rectangular, having a length and width, and the mat body preferably can be separated into generally rectangular subsections having a subsection width, the subsection width being less than the width of the mat body. The term "generally rectangular" is defined as including shapes literally rectangular as well as otherwise similar shapes having one or more rounded or slanted corners, slightly curved or slightly non-parallel sides, and the like. Preferably the mat body width is one typical of conventional insect mats intended for use in a wide variety of conventional mat heaters that are sold in Europe, South America, and elsewhere. A conventional insect mat is from about 17 to 22 mm in width. Subsections having a width less than the width of such a mat body can be placed lengthwise on the hot surface of a conventional mat heater over the hottest portion of the hot surface.

Typically such hot surfaces of conventional mat heaters are rectangular, with a length and a narrower width. The hottest portion typically extends centrally for at least a part of the length. Placing the subsections of the mat of the invention on the hottest portion of the hot surface ensures that substantially all of subsection is exposed to the heater's hottest temperatures. This arrangement causes a greater percent of the volatile materials on the subsection to be driven off when compared to the percent driven off from a conventional mat that covers the entire hot surface, including its cooler outside edges.

In a preferred embodiment, the mat body can be readily separated into three, substantially similar subsections. It is especially preferred that the mat body be generally rectangular, having a length and width, and that the mat body be readily separated into generally rectangular subsections, each subsection having a subsection width, the subsection width being less than the width of the mat body.

The insect control mat has a heat-responsive colorant distributed in the mat. The colorant may be distributed throughout the thickness of the mat body or may be present only on the surface thereof. Visual changes in the colorant serve as a cue to the user that the mat body has been heated sufficiently to have released volatile materials to a preestablished extent. Preferably, all the subsections are equally treated with the colorant. A preferred colorant is Fat Blue B dye, which is a blue color that fades with heating.

The mat body of the insect control mat preferably includes a heat-volatilizable insect control active ingredient that preferably is distributed among the subsections in substantially equal amounts. An "insect control active ingredient" is defined to be an insecticide, insect repellent, insect growth or development modifier, or other material that kills, repels, causes anti-feedant behavior, or otherwise modifies the behavior of insects. Anti-feedant behavior is achieved if an insect is induced not to bite exposed skin, irrespective of whether the insect is killed or is repelled from the area. The preferred insect control active ingredient is present in each of the subsections in amounts sufficient, when the subsection is heated in a conventional insect mat heater, to release amounts effective to either kill, repel, or induce anti-feedant behavior within a space to be protected and over the period of time for which protection is desired. An example of a conventional insect mat heater is the electric heater currently sold in various European countries by S. C. Johnson & Son, Inc. or its subsidiaries under the RAID® brand. A preferred space to be protected is from about 25 to 50 cubic meters. A preferred period of time for protection is from six to eight hours.

The mat body can be surface treated or permeated with the insect control ingredient, whether by spraying, printing, dipping, or any other conventional means. It is preferred to treat the mat body by spraying it with a measured dose of insect control ingredient, which then migrates into the mat body to the extent allowed by the material of which the mat body is made.

Preferred insect control active ingredients are the following:

| **Common name;** | **Chemical name:** | **Commercial source:** |
|---|---|---|
| Pynamin forte | (RS)-3-allyl-2-methyl-4-oxocyclopent-2-enyl(1R)-cis/trans chrysanthemate | Sumitomo |
| BioAllethrin | (S)-3-allyl-3-methyl-4-oxocyclopent-2-enyl(1R)-trans-2,2-dimethyl-3-(2-methylprop-1-enyl)cyclopropanecarboxylate | Aventis |
| Esbiothrin | (1RS)-3-allyl-2-methyl-4-oxocyclopent-2-enyl (1R)-trans-chrysanthemate | Aventis |
| Esbiol | (S)-3-allyl-3-methyl-4-oxocyclopent-2-enyl-(1R)-trans-2,2-dimethyl-3-(2-methylprop-1-enyl)cyclopropanecarboxylate | Aventis |
| Natural Pyrethrum | Plant extract containing 1S-2-methyl-4-oxo-3-(cis-penta-2,4-dienyl)cyclopent-2-enyl-1R, eR-2,2-dimethyl-3-(trans-methylprop-1-enyl)cyclopropanecarboxylate | Py Board of Kenya |
| Prallethrin | (RS)-2-methyl-4-oxo-3-prop-2-ynylcyclopent-2-enyl (IRS)-cis-trans-2,2-dimethyl-3-(2-methyl prop-1-enyl) cyclopropanecarboxylate | Sumitomo |
| Transfluthrin | [(2,3,5,6 tetraflurophenyl) methyl 1R,3R(2,2-dichlorethenyl)-2,2-dimethylcyclopropanecarboxylate | Bayer |

Of these insect control active ingredients, Pynamin forte is most preferred for, among other things, its practical efficacy and its cost. Preferably, the mat body of the insect control mat of the invention includes Pynamin forte in a total amount of from 60 to 180 mg, distributed among the subsections in substantially equal amounts and deposited on the mat body by spraying.

The insect control mat can be used as set out in the following steps (all terms being as defined, above). First, an insect control mat is provided having a mat body having a thickness, the mat body having indentations that define break lines such that a user of the mat body can readily separate the mat body along the break lines into subsections. Then a first one of the subsections is separated from the remainder of the mat body and, at a first time, is heated in the insect mat heater. Then, a subsequent subsection is separated from the remainder of the mat body and heated in the insect mat heater at a time subsequent to said first time. The step of separating and heating subsequent subsections of the mat body is repeated until all subsections have been heated. Subsections can either be separated from the mat body only when about to be heated, or two or more subsections can be separated immediately and held for subsequent use. Preferably, the mat body of the insect control mat provided includes Pynamin forte in a total amount of from 60 to 180 mg, distributed among three subsections in substantially equal amounts.

Alternatively, the following steps are possible again with all terms as defined, above. First, an insect control mat is provided having a mat body having a thickness, the mat body having indentations that define break lines such that a user of the mat body can readily separate the mat body along the break lines into subsections. Then a first one of the subsections is separated from the remainder of the mat body and heated in a first insect mat heater. Then, either at the same time or later, a subsequent subsection is separated from the remainder of the mat body and heated in a second insect mat heater. By this means, subsections of a single insect control mat can be used to control insects at two or more locations. Preferably, the mat body of the insect control mat provided includes Pynamin forte in a total amount of from 60 to 180 mg, distributed among three subsections in substantially equal amounts.

### BRIEF DESCRTPTION OF THE DRAWING

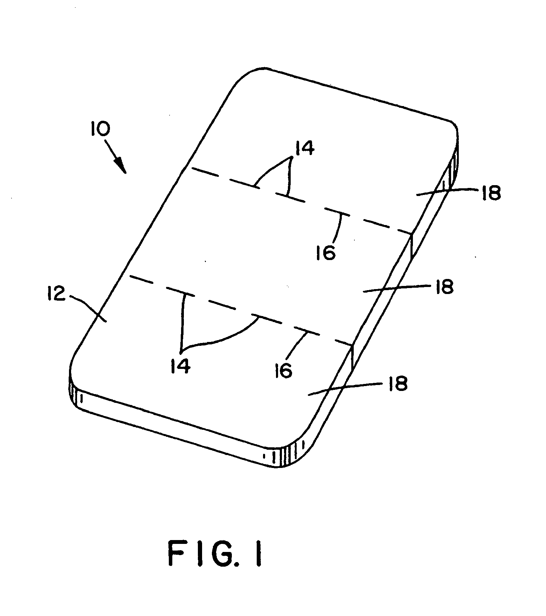

Fig. 1 is a perspective view of the preferred embodiment of the segmented insect control mat of the invention.

### DETAILED DESCRIPTION OF THE INVENTION

Turning now to the drawing, a segmented insect control mat is shown generally at 10 in Fig. 1. The insect control mat 10 has a mat body 12 having a selected thickness. Preferably, the mat body 12 is generally planar and generally rectangular, as is shown in Fig. 1. The corners of the generally rectangular mat body 12 shown are somewhat rounded to facilitate insertion into a conventional mat heater.

The mat body 12 has indentations 14 that define two break lines 16. The indentations 14 are slits that perforate the mat body 12 and extend laterally with respect to the break line 16 established by the indentations. As is preferred, the break lines 16 are so located as to divide the mat body 12 into three, substantially equal subsections 18.

As preferred, the mat body 12 is treated with a heat responsive colorant and a heat volatilizable insect control active ingredient. The colorant is consistently distributed in the mat body 12. The insect control active ingredient is so distributed among the subsections 18 that an amount is present in each subsection that is sufficient to supply the desired amount of insect control for the desired period of time when the subsection is separated from the mat body 12 and is placed in a selected mat heater. Preferred colorants and insect control active ingredients have been disclosed, above.

The preceding description is merely of preferred embodiments of the invention. One skilled in the art will readily apprehend alternative embodiments that nevertheless fall within the scope and breadth of the invention as claimed. Thus, the claims should be looked to in order to understand the full scope of the invention.

### INDUSTRIAL APPLICABILITY

An insect control mat is disclosed that is manufacturable by known procedures and has practical application in the control of insects.

## Claims

1. An insect control mat (10) comprising a generally rectangular mat body (12), the mat body (12) having indentations (14) that define break lines (16) such that a user of the mat body (12) can readily separate the mat body (12) manually along the break lines (16) into subsections (18), said subsections (18) having a width less than the width of the mat body (12); **characterized in that** said mat body (12) has a heat-responsive colorant distributed therein or is present only on the surface of the mat body (12) to serve as a cue to the user that the mat body (12) has been heated sufficiently to have released volatile materials to a pre-establisched extent, said break lines comprising slits that perforate the mat body (12) or partial thickness indentations which penetrate to a depth from 50% to 80% of the thickness of the mat body.

2. An insect control mat (10) according to claim 1, wherein the colorant is distributed throughout the thickness of the mat body (12).

3. An insect control mat (10) according to any preceding claim, wherein the mat body (12) has a thickness between 2.0 mm and 2.5 mm.

4. An insect control mat (10) according to any preceding claim, wherein the indentations define two break lines (16) dividing the mat body (12) into three substantially equal subsections (18).

5. An insect control mat (10) according any preceding claim, wherein the insect control ingredient is selected from the group consisting of Pynamin forte, BioAllethrin, Esbiothrin, Esbiol, Prallethim, natural pyrethrum and Transflutherin.

6. An insect control mat (10) according to claim 5, wherein the body includes Pynamin forte in a total amount of from 60 to 180 mg, distributed among the subsections in substantially equal amounts.

## Patentansprüche

1. Insektenbekämpfungsmatte (10) mit einem allgemein rechteckigen Mattenkörper (12), der Einkerbungen (14) enthält, die Bruchlinien (16) bilden, so dass ein Benutzer des Mattenkörpers (12) diesen entlang der Bruchlinien (16) auf einfache Weise zu Unterabschnitten (18) aufteilen kann, wobei die Breite dieser Unterabschnitte (18) geringer ist als die des Mattenkörpers (12), **dadurch gekennzeichnet, dass** ein auf Wärme reagierender Farbstoff im Mattenkörper (12) verteilt oder nur auf der Oberfläche des Mattenkörpers (12) vorliegt, um als Hinweis für den Nutzer zu dienen, dass der Mattenkörper (12) stark genug erwärmt worden ist, dass flüchtige Stoffe in einem vorbestimmten Ausmaß freigesetzt worden sind, wobei die Bruchlinien Schlitze, die den Mattenkörper (12) durchdringen, oder teilweise Einkerbungen aufweisen, die von 50 % bis 80 % der Dicke des Mattenkörpers in ihn eindringen.

2. lnsektenbekämpfungsmatte (10) nach Anspruch 1, bei der der Farbstoff über die gesamte Dicke des Mattenkörpers (12) verteilt ist.

3. Insektenbekämpfungsmatte (10) nach einem der vorgehenden Ansprüche, deren Mattenkörper (12) zwischen 2,0 mm und 2,5 mm dick ist.

4. Insektenbekämpfungsmatte (10) nach einem der vorgehenden Ansprüche, bei der die Einkerbungen zwei Bruchlinien (16) bilden, die den Mattenkörper (12) zu drei im Wesentlichen gleichen Unterabschnitten (18) aufteilen.

5. Insektenbekämpfungsmatte (10) nach einem der vorgehenden Ansprüche, bei der das Insektenbekämpfungsmittel aus der aus Pynamin forte, BioAllethrin, Esbiothrin, Esbiol, Prallethin, natürlichem Pyrethrum und Transflutherin bestehenden Gruppe gewählt ist.

6. Insektenbekämpfungsmatte (10) nach Anspruch 5, deren Körper Pyramin forte in einer Gesamtmenge von 60 mg bis 180 mg in im Wesentlichen gleichen Mengen unter den Unterabschnitten verteilt enthält.

## Revendications

1. Tablette anti-insectes (10) comprenant un corps de tablette généralement rectangulaire (12), le corps de tablette (12) ayant des indentations (14) qui définissent des lignes de cassure (16) de sorte qu'un utilisateur du corps de tablette (12) peut facilement séparer le corps de tablette (12) manuellement le long des lignes de cassure (16) en sous-parties (18), lesdites sous-parties (18) ayant une largeur inférieure à la largeur du corps de tablette (12) ; **caractérisé en ce que** ledit corps de tablette (12) a un colorant sensible à la chaleur réparti dedans ou est présent uniquement à la surface du corps de tablette (12) pour servir de signal à l'utilisateur que le corps de tablette (12) a été chauffé suffisamment pour avoir libéré des matières volatiles jusqu'à une ampleur pré-établie, lesdits lignes de cassure comprenant des fentes qui perforent le corps de tablette (12) ou des indentations d'épaisseur partielle qui pénètrent jusqu'à une profondeur de 50 % à 80 % de l'épaisseur du corps de tablette.

2. Tablette anti-insectes (10) selon la revendication 1, dans laquelle le colorant est réparti à travers toute l'épaisseur du corps de tablette (12).

3. Tablette anti-insectes (10) selon l'une quelconque des revendications précédentes, dans laquelle le corps de tablette (12) a une épaisseur entre 2,0 mm et 2,5 mm.

4. Tablette anti-insectes (10) selon l'une quelconque des revendications précédentes, dans laquelle les indentations définissent deux lignes de cassure (16) divisant le corps de tablette (12) en trois sous-parties (18) sensiblement égales.

5. Tablette anti-insectes (10) selon l'une quelconque des revendications précédentes, dans laquelle l'ingrédient de contrôle d'insectes est choisi parmi le groupe constitué de Pynamine forte, de Bioalléthrine, d'Esbiothrine, d'Esbiol, de Pralléthrine, de pyrèthre naturel et de Transfluthrine.

6. Tablette anti-insectes (10) selon la revendication 5, dans laquelle le corps inclut de la pynamine forte en une quantité totale de 60 à 180 mg, répartie entre les sous-parties en quantités sensiblement égales.
